# FASCICULE DE BREVET EUROPEEN

(11) **EP 4 440 135 B1**
(45) Date de publication et mention de la délivrance du brevet: **21.01.2026**
(21) Numéro de dépôt: 24166415.0
(22) Date de dépôt: 26.03.2024
(51) Int. Cl.: H04N 25/61, G01M 11/02

(54) **PROCÉDÉ DE MESURE ET/OU DE COMPENSATION D'UNE ABERRATION DANS UNE IMAGE ACQUISE PAR UN INSTRUMENT OPTIQUE COMPRENANT UNE MATRICE DE DÉTECTEURS MULTISPECTRAUX**
VERFAHREN ZUR MESSUNG UND/ODER KOMPENSATION EINER ABERRATION IN EINEM BILD, DAS VON EINEM OPTISCHEN INSTRUMENT MIT EINER MATRIX VON MULTISPEKTRALEN DETEKTOREN AUFGENOMMEN WURDE
METHOD FOR MEASURING AND/OR COMPENSATING AN ABERRATION IN AN IMAGE ACQUIRED BY AN OPTICAL INSTRUMENT COMPRISING AN ARRAY OF MULTISPECTRAL DETECTORS

(30) Priorité: 28.03.2023 FR 2302967
(43) Date de publication de la demande: 02.10.2024
(73) Titulaire: Centre National d'Études Spatiales, 75039 Paris Cedex 01 (FR)
(72) Inventeur: CUCCHETTI, Edoardo, 31300 TOULOUSE (FR); LATRY, Christophe, 31400 TOULOUSE (FR); LUCAS, Sylvain, 31650 SAINT-ORENS-DE-GAMEVILLE (FR)
(74) Mandataire: Germain Maureau

(56) Documents cités:
- US-A1- 2020 116 589
- CHRISTIAN JOHN A ET AL: "Geometric Calibration of the Orion Optical Navigation Camera using Star Field Images", JOURNAL OF THE ASTRONAUTICAL SCIENCES, AMERICAN ASTRONAUTICAL SOCIETY, NEW YORK, NY, US, vol. 63, no. 4, 13 July 2016 (2016-07-13), pages 335 - 353, XP036070903, ISSN: 0021-9142, [retrieved on 20160713], DOI: 10.1007/S40295-016-0091-3

## Description

La présente invention concerne le domaine de l'étalonnage d'un instrument optique comprenant un capteur matriciel, en particulier un capteur optique matriciel multi spectral, par observation d'une source ponctuelle connue, nécessaire notamment pour la compensation d'une ou plusieurs aberrations optiques de l'instrument optique dans une image acquise par l'instrument optique.

Il est connu de compenser une ou plusieurs aberrations optiques de l'instrument optique dans une image acquise par un instrument optique comprenant une matrice de détecteurs, à l'aide d'une modélisation paramétrique d'une réponse impulsionnelle de l'instrument, en prenant en compte les différents contributeurs à la formation de l'image par l'instrument, i.e. une combinaison optique, un détecteur, un déplacement de l'instrument durant le temps de pose, etc...

Les procédés connus, tels que décrit notamment dans les documents D1= US2020/116589 A1, ou D2=CHRISTIAN JOHN A ET AL : « Geometric Calibration of the Orion Optical Navigation Camera using Star Field Images », JOURNAL OF THE ASTRONAUTICAL SCIENCES, AMERICAN ASTRONAUTICAL SOCIETY, NEW YORK, NY, US, vol.63, n0.4, 13 juillet 2016, pages 335-353, ne traitent cependant pas le cas d'un instrument optique comprenant une matrice de détecteurs multispectraux.

L'invention a donc pour but de proposer une solution à tout ou partie de ces problèmes.

A cet effet, la présente invention concerne un procédé de mesure d'une aberration dans une image acquise par un instrument optique comprenant une matrice de détecteurs multispectraux, la matrice de détecteurs multispectraux comprenant une matrice de détecteurs, et une pluralité de matrices de filtres spectraux, chaque matrice de filtre spectral étant associée à une bande spectrale, le procédé comprenant les étapes suivantes :
- acquisition par la matrice de détecteurs de l'instrument optique d'une image d'une source ponctuelle de spectre connu, l'image comprenant, pour chaque matrice de filtre spectral, une partie d'une tache image de la source ponctuelle acquise dans la bande spectrale de ladite matrice de filtre spectral ;
- pour chaque matrice de filtre spectral, détermination d'une valeur initiale de chaque paramètre d'un ensemble de paramètres d'un modèle paramétrique d'une réponse impulsionnelle modélisée de l'instrument optique, l'ensemble de paramètres comprenant un sous-ensemble de paramètres commun à la pluralité de matrices de filtres spectraux, et un sous-ensemble de paramètres spécifiques à chaque matrice de filtre spectral;
- pour chaque matrice de filtre spectral, échantillonnage d'une réponse impulsionnelle calculée sur la base de la valeur initiale des paramètres appliquée au modèle paramétrique, l'échantillonnage étant réalisé selon un masque d'échantillonnage associé à la matrice de filtre spectral,
- pour chaque matrice de filtre spectral, calcul d'une valeur d'un coût dans la bande spectrale, la valeur du coût étant fonction d'une distance entre la réponse impulsionnelle calculée et la réponse impulsionnelle observée pour chacun des points du masque d'échantillonnage,
- calcul d'une valeur d'un coût global pour l'ensemble des bandes spectrales en fonction de la valeur du coût dans chaque bande spectrale,
- pour chaque matrice de filtre spectral, estimation d'une valeur estimée de chaque paramètre de l'ensemble de paramètres, la valeur estimée étant fonction d'une variation estimée à partir de la valeur du coût global, la valeur estimée étant égale à la variation estimée ajoutée à la valeur initiale des paramètres;
- pour chaque matrice de filtre spectral, échantillonnage d'une nouvelle réponse impulsionnelle calculée sur la base de la valeur estimée des paramètres appliquée au modèle paramétrique, l'échantillonnage étant réalisé selon le masque d'échantillonnage associé à la matrice de filtre spectral,
- pour chaque matrice de filtre spectral, calcul d'une nouvelle valeur du coût dans ladite bande spectrale, la nouvelle valeur du coût étant fonction de la distance entre la nouvelle réponse impulsionnelle calculée et la réponse impulsionnelle observée pour chacun des points du masque d'échantillonnage,
- calcul (105bis) d'une nouvelle valeur du coût global pour l'ensemble des bandes spectrales en fonction de la nouvelle valeur du coût dans chaque bande spectrale.
- comparaison entre la nouvelle valeur du coût global et la valeur du coût global pour obtenir un résultat de la comparaison;
- déterminer que la valeur initiale des paramètres est égale la valeur estimée des paramètres et que la valeur du coût global est égale à la nouvelle valeur du coût global, et pour chaque matrice de filtre spectral, répéter les étapes comprises entre l'étape d'estimation d'une valeur estimée des paramètres, jusqu'à l'étape de comparaison entre la nouvelle valeur du coût global et la valeur du coût global jusqu'à ce qu'un critère d'arrêt soit satisfait par le résultat de la comparaison, de sorte qu'à chaque itération de l'étape de répétition, au cours de l'étape d'estimation la variation est estimée à partir d'une valeur initiale des paramètres égale à la valeur estimée des paramètres estimée au cours de l'itération précédente, et à partir d'une valeur du coût global égale à une nouvelle du coût global calculée au cours de l'itération précédente;
- déterminer une mesure de l'aberration sur la base de la valeur estimée des paramètres de la réponse impulsionnelle.

Selon un mode de mise en œuvre, l'invention comprend une ou plusieurs des caractéristiques suivantes, seules ou en combinaison techniquement acceptable.

Selon un mode mise en œuvre, la source ponctuelle est une étoile observée hors de l'atmosphère terrestre, une réponse spectrale de l'étoile observée étant connue.

Selon un mode mise en œuvre, la valeur initiale des paramètres est égale à 0 pour chaque paramètre.

Selon un mode de mise en œuvre, chaque matrice de filtre spectral est superposée à la matrice de détecteurs, une position de la matrice de filtre spectral relativement à la matrice de détecteurs étant décalée selon au moins l'une parmi les deux dimensions de la matrice de détecteurs, de sorte que chaque point d'échantillonnage du masque d'échantillonnage associé à une matrice de filtre spectral est décalé par rapport à un point correspondant du masque d'échantillonnage associé à une autre matrice de filtre spectral.

Selon ces dispositions, plus le nombre de matrices de filtres spectraux est important plus l'estimation de la valeur des paramètres communs du modèle paramétrique est robuste, et meilleure est la qualité de la compensation de l'aberration obtenue grâce au modèle.

Selon un mode mise en œuvre, l'étape d'acquisition comprend l'acquisition de plusieurs sources ponctuelles connues et/ou plusieurs acquisitions d'une même source ponctuelle connue, l'ensemble de paramètres du modèle paramétrique comprenant un sous-ensemble de paramètres spécifiques à chaque acquisition, le modèle paramétrique de réponse impulsionnelle étant associé aux différentes réponses impulsionnelles observées dans la bande spectrale de chaque matrice de filtre spectral, et pour chaque source ponctuelle et/ou pour chaque acquisition d'une même source ponctuelle, et dans lequel les étapes suivantes sont mises en œuvre pour chaque matrice de filtre spectral, et pour chaque source ponctuelle, et/ou pour chaque acquisition d'une même source ponctuelle :
- étape de détermination de la valeur initiale des paramètres, et étape d'estimation de la valeur estimée des paramètres,
- étapes d'échantillonnage de la réponse impulsionnelle calculée sur la base de la valeur initiale des paramètres, respectivement de la nouvelle réponse impulsionnelle calculée sur la base de la valeur estimée des paramètres,
- étapes de calcul de la valeur du coût, respectivement de la nouvelle valeur du coût,
et dans lequel la valeur du coût global, respectivement la nouvelle valeur du coût global, est calculée pour l'ensemble des bandes spectrales et pour l'ensemble des sources ponctuelles.

Selon un mode de mise en œuvre, parmi la pluralité d'acquisitions successives d'une source ponctuelle, au moins un paramètre du modèle paramétrique prend une valeur au cours d'une acquisition et une autre valeur différente au cours d'au moins une autre acquisition, la valeur et l'autre valeur dudit au moins un paramètre étant inconnues lors de l'étape d'acquisition. La variation appliquée entre la valeur et l'autre valeur n'est pas nécessairement connue. Si la variation du paramètre est connue, l'estimation de la valeur des paramètres du modèle paramétrique sera plus robuste.

Selon un mode de mise en œuvre, la pluralité de matrices de filtres spectraux comprend au moins trois matrices de filtres spectraux, configurées pour filtrer chacune dans une bande spectrale complémentaire des autres matrices.

Selon un mode de mise en œuvre, la pluralité de matrices de filtres spectraux est du type matrice de Bayer.

Selon un mode de mise en œuvre, à l'étape d'estimation de la valeur estimée de chaque paramètre, la variation est estimée à partir d'une matrice jacobienne du modèle paramétrique de la réponse impulsionnelle, de sorte que la répétition, des étapes comprises entre l'étape d'estimation d'une valeur estimée des paramètres, et l'étape de comparaison entre la nouvelle valeur du coût global et la valeur du coût global, jusqu'à ce qu'un critère d'arrêt soit satisfait par le résultat de la comparaison, correspond à une mise en œuvre d'un algorithme itératif du type Levenberg-Marquardt.

Selon un mode de mise en œuvre, une amplitude de la variation estimée est contrainte, de sorte que la variation estimée est comprise entre une valeur minimum et une valeur maximum.

Selon un mode de mise en œuvre, la valeur du coût global, respectivement la nouvelle valeur du coût global, est égale à une somme de la valeur des coûts, respectivement de la nouvelle valeur des coûts, sur l'ensemble des bandes spectrales.

Selon un mode de mise en œuvre, le résultat de la comparaison est égal à une différence entre la valeur du nouveau coût global et la valeur du coût global, le critère d'arrêt prédéterminé étant satisfait lorsque le résultat de la comparaison est inférieur à un seuil.

Selon un mode de mise en œuvre, l'ensemble des paramètres comprend au moins l'un parmi les paramètres d'une réponse impulsionnelle représentative d'une partie optique de l'instrument optique, les paramètres d'une réponse impulsionnelle représentative de l'intégration des charges sur au moins un détecteur élémentaire de la matrice de détecteurs, les paramètres d'une réponse impulsionnelle représentative d'un filé, i.e. d'un mouvement linéaire, de la matrice de détecteurs pendant un temps de pose, les paramètres d'une réponse impulsionnelle représentative d'un bougé, i.e. d'un mouvement non linéaire, de la matrice de détecteurs pendant le temps de pose, les paramètres représentatifs des coordonnées d'une image géométrique de la source ponctuelle, ladite image géométrique étant ponctuelle..

Selon un mode de mise en œuvre, le procédé comprend une étape dans laquellela mesure de l'aberration est utilisée pour compenser l'aberration par un traitement d'amélioration de l'image acquise par l'instrument optique, le traitement d'amélioration étant fonction de la mesure de l'aberration, le traitement comprenant par exemple une application d'un filtre de compensation calculé à partir de la mesure de l'aberration, ou le traitement comprenant par exemple une restauration de l'image fonction de la mesure de l'aberration
Selon un mode de mise en œuvre, le traitement est une commande de l'instrument optique pour actionner une optique active de l'instrument optique, la commande étant basée sur la valeur estimée des paramètres du modèle paramétrique.

Selon un mode de mise en œuvre, la commande est l'application d'une consigne de correction des aberrations optiques à des moyens de correction, par exemple en agissant sur un ou plusieurs degrés de libertés d'un miroir secondaire de la combinaison optique ou sur un miroir déformable de la combinaison optique. A titre d'exemple, la refocalisation peut consister à translater le miroir secondaire le long d'un axe optique d'une quantité déterminée à partir de la mesure de l'aberration selon le procédé.

Selon un mode de mise en œuvre, la commande de l'instrument optique est une commande de focalisation.

Selon un aspect l'invention concerne également un programme d'ordinateur comprenant un ensemble d'instructions configuré pour mettre en œuvre le procédé selon l'un des modes de mise en œuvre décrit ci-avant lorsqu'il est exécuté par un processeur d'une unité de traitement des images et de contrôle, d'un instrument optique comprenant une matrice de détecteurs multispectraux, la matrice de détecteurs multispectraux comprenant une matrice de détecteurs, et une pluralité de matrices de filtres spectraux, chaque matrice de filtre spectral étant associée à une bande spectrale.

Selon un autre aspect l'invention concerne également un support lisible par un ordinateur comprenant le programme d'ordinateur décrit ci-avant.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.

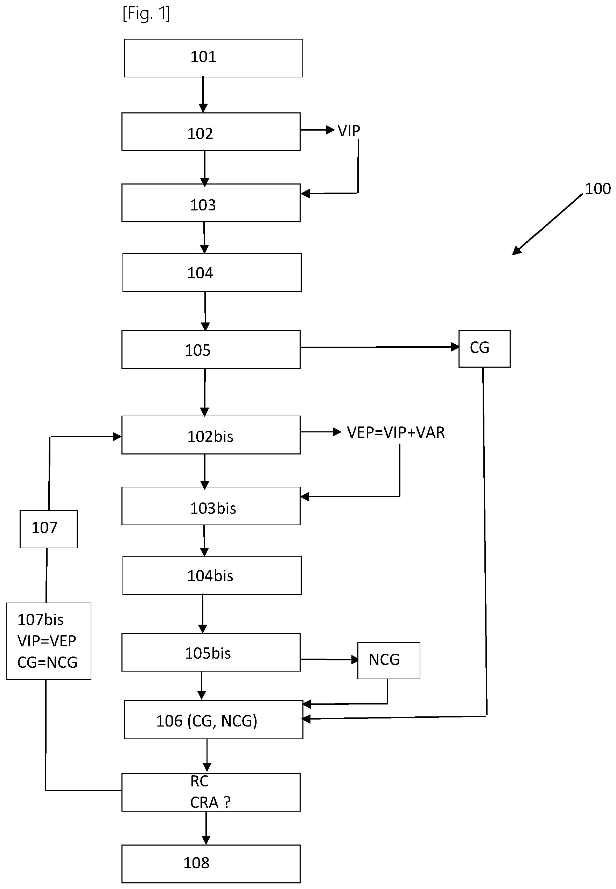

[Fig. 1] est une représentation schématique de la séquence des étapes du procédé selon un exemple de mise en œuvre de l'invention.

Le procédé selon l'invention est basé sur une optimisation combinée de paramètres d'un modèle d'une réponse impulsionnelle modélisée à partir d'un ensemble d'acquisition d'une source ponctuelle connue, par exemple une étoile dans le cas d'observations hors de l'atmosphère terrestre. A partir d'une modélisation fine de la chaîne d'acquisition, i.e de l'instrument optique qui comprend notamment l'optique, le détecteur, les filtres multispectraux, et leur agencement, les paramètres du modèle sont affinés de manière itérative. Les paramètres comprennent des paramètres globaux relatifs à un état global de la chaîne d'acquisition, et des paramètres plus spécifiques à chaque bande spectrale.

Selon un exemple de réalisation de la matrice de détecteurs multispectraux, la pluralité de matrices de filtres spectraux comprend au moins trois matrices de filtres spectraux, configurées pour filtrer chacune dans une bande spectrale complémentaire des autres matrices. L'homme du métier comprendra que chaque filtre n'est pas strictement limité à une longueur d'onde, i.e. chaque filtre a une transmission faible mais non nulle dans des longueurs d'ondes voisines autour de la longueur d'onde centrale du filtre. Par ailleurs, le procédé selon l'invention s'applique également à une combinaison comprenant une bande panchromatique, et un ou plusieurs filtres mono-spectraux.

Selon un exemple particulier de réalisation, la pluralité de matrices de filtres spectraux est du type matrice de Bayer.

Une valeur des paramètres du modèle est estimée en recherchant la valeur qui minimise une fonction de coût, fonction d'un écart entre la réponse impulsionnelle modélisée et la réponse impulsionnelle observée . La recherche de la valeur des paramètres qui minimise la fonction de coût est réalisée en utilisant un algorithme itératif, à partir d'une valeur initiale de chaque paramètre de l'ensemble de paramètres, avec un critère d'arrêt de l'algorithme itératif. L'algorithme itératif est par exemple un algorithme de Levenberg Marquardt.

Ainsi, pour chaque observation d'une source ponctuelle et pour chaque bande spectrale, est estimée une valeur des paramètres, pour chaque paramètre de l'ensemble des paramètres considérés, qui minimise ladite fonction de coût.

La valeur des paramètres ainsi obtenues est utilisée pour calculer, à partir du modèle paramétrique, une valeur de la réponse impulsionnelle modélisée pour l'ensemble des pixels de la matrice de détecteurs.

Pour chaque bande spectrale, la réponse impulsionnelle modélisée sur la base de la valeur estimée des paramètres est ensuite échantillonnée selon un masque d'échantillonnage associé à la matrice de filtre spectral.

Un écart entre la réponse impulsionnelle modélisée et la réponse impulsionnelle observée dans ladite bande spectrale est calculé sur la base d'une différence entre la réponse impulsionnelle modélisée et la réponse impulsionnelle observée pour chacun des points du masque d'échantillonnage pour ladite bande spectrale.

Autrement dit, pour calculer l'écart, la réponse impulsionnelle modélisée est échantillonnée selon le masque d'échantillonnage de chaque filtre spectral, et la différence entre la réponse impulsionnelle modélisée et la réponse impulsionnelle observée n'est calculée que pour ces points du masque. Chaque point n'est analysé qu'une fois.

Un coût, fonction de l'écart ainsi calculé, est déterminé pour chaque bande spectrale, et un coût global, pour l'ensemble des bandes spectrales considérées, est calculé sur la base de l'ensemble des écarts calculés pour chaque bande spectrale.

Les étapes ci-dessus sont répétées jusqu'à ce qu'une différence entre la valeur du coût global et la valeur suivante du coût global soit inférieur à un seuil prédéterminé, autrement dit jusqu'à ce que la valeur du coût global s'approche suffisamment d'une valeur limite indéterminée.

Le procédé selon un exemple de mise en œuvre de l'invention, tel que décrit ci-avant, permet d'améliorer une précision de détermination des paramètres physiques de l'instrument optique, notamment de la combinaison optique ; il permet également d'étalonner les dispositifs d'actionnement et de correction de l'instrument en simplifiant considérablement les conditions opérationnelles : la mise en œuvre du procédé nécessite uniquement quelques images acquises par l'instrument de points sources connus, par exemple des étoiles. Contrairement aux méthodes actuelles (de refocalisation, d'étalonnage absolue, de mesure de la FTM) qui nécessitent soit l'observation de cibles variées, soit des contraintes opérationnelles fortes (besoin impératif de défocalisation volontaire de l'instrument pour acquisitions à différents points de fonctionnement), la méthode proposée ne nécessite que quelques acquisitions sur des étoiles connues : il n'y a pas besoin d'avoir plusieurs points de focalisation, et si plusieurs points de focalisation sont utilisés, il n'est pas nécessaire de connaître précisément la variation appliquée entre ces points de focalisation. Dans le cas d'une pupille optique symétrique, il y a ambiguité de signe sur la partie symétrique des aberrations optiques. Par exemple, dans le cas du defocus, on ne sait pas dans quel sens déplacer le miroir secondaire. Cette ambiguité est levée si on dispose d'acquisitions pour lesquelles on a volontairement introduit un defocus connu, ou si la pupille n'est pas symétrique , ce qui est le cas usuel en raison de la présence de « bras » radiaux dûs aux supports physiques dudit miroir secondaire.

Le procédé permet par exemple de compenser une distorsion dans une image acquise par un instrument optique, l'instrument optique comprenant notamment une combinaison optique et une matrice de détecteurs multispectraux, la combinaison optique étant agencée pour former une image d'une scène observée sur la matrice de détecteurs multispectraux placée dans un plan focal de la combinaison optique.

Le traitement de compensation de la distorsion est, selon un exemple de mise en œuvre, une transformation de l'image par application d'une matrice de transformation géométrique, ladite matrice de transformation géométrique étant une matrice de passage de coordonnées angulaires d'un point de la scène observée à des coordonnées dans un référentiel cible. La matrice de transformation est déterminée à partir de paramètres qui permettent de modéliser une réponse impulsionnelle de l'instrument de manière à compenser le ou les différents facteurs de distorsion introduits par les différents composants de l'instrument optique.

Le procédé permet par exemple également compenser la distorsion par une commande d'actionnement d'une optique active de l'instrument optique, en vue d'arriver à état d'aberration optique cible après actuation. Ceci est applicable à la refocalisation de l'instrument optique et participe ainsi à l'étalonnage d'une optique active.

Le procédé permet par exemple également l'estimation de paramètres géométriques (position/rotation) de miroirs de la combinaison optique, et plus généralement de tout paramètre intervenant dans le modèle optique ;
Le procédé permet par exemple également la mesure de la FTM pour calibrer les algorithmes de restauration, ou le calcul du coefficient d'étalonnage absolue permettant le passage des valeurs de compte numériques en luminance équivalente.

Le procédé permet par exemple également une ré-estimation d'une FTM détecteur qui traduit l'effet d'intégration des charges sur un détecteur élémentaire (diffusion des charges élargissant la PSF) pour améliorer le modèle de la chaîne d'acquisition.

Le procédé permet par exemple également une estimation du filé (mouvement linéaire) pour estimer les dérives de pointage du satellite ;
Le procédé permet par exemple également une estimation du bougé (reliquat non linaire des déplacements) pour estimer les vibrations.

Le procédé 100 selon un exemple de mise en œuvre de l'invention va maintenant être décrit en référence à la figure 1.

Le procédé comprend une étape d'acquisition 101, par la matrice de détecteurs de l'instrument optique, d'une image d'une ou de plusieurs sources ponctuelles connues ; notamment, le spectre d'émission et la magnitude apparente de chacune de ces étoiles est connu.

Selon un exemple de mise en œuvre l'étape d'acquisition 101 peut comprendre également plusieurs acquisitions d'une même source ponctuelle connue.

La ou les sources ponctuelles sont par exemple des étoiles, une réponse spectrale de chacune des étoiles observées étant connue.

L'image comprend, pour chaque source ponctuelle, et pour chaque matrice de filtre spectral, une tache image acquise dans la bande spectrale de ladite matrice de filtre spectral ; pour chaque source ponctuelle, l'image de la source ponctuelle est étalée sur un ensemble de pixels adjacents appartenant à des bandes spectrales potentiellement différentes. Il faut distinguer la réponse impulsionnelle instrumentale monochromatique, image d'une source ponctuelle monochromatique de longueur d'onde donnée et d'intégrale unité (distribution de Dirac spatiale et spectrale) et l'image d'une source ponctuelle polychromatique qui sera une intégrale spectrale des réponses impulsionnelles monochromatiques pondérées par la réponse spectrale des étoiles. Autrement dit, la tache image d'une source ponctuelle diffère d'une bande spectrale à une autre bande spectrale.

La tache image d'une source ponctuelle, dans chaque bande spectrale, correspond à une réponse impulsionnelle de l'instrument optique observée dans ladite bande spectrale. La réponse impulsionnelle de l'instrument optique dans chaque bande spectrale est modélisée, d'une manière connue de l'homme du métier, comme un produit de convolution des réponses impulsionnelles dans ladite bande spectrale des différents éléments de la chaîne d'acquisition constitutive de l'instrument optique considéré. L'instrument optique, comprend en particulier l'optique de l'instrument optique, les détecteurs élémentaires de la matrice de détecteurs, sans oublier le cas échéant les autres contributeurs à la réponse impulsionnelle de l'instrument tels que d'éventuels déplacements pendant le temps de pause (filé et/ou bougé).

Le modèle paramétrique de la réponse impulsionnelle est ainsi une fonction d'un ensemble de paramètres physiques caractéristiques des différents contributeurs de la chaîne d'acquisition, i.e. de l'instrument optique. L'ensemble de paramètres comprend des paramètres globaux, tel que par exemple les coefficients des polynomes de Zernike, caractéristiques d'un état global de la combinaison optique, et des paramètres spécifiques à certains éléments de la chaîne d'acquisition de l'instrument optique, notamment spécifiques à chaque bande spectrale et à chaque acquisition. Ainsi, par exemple, l'ensemble des paramètres peut comprendre les paramètres d'une réponse impulsionnelle représentative d'une pupille de l'instrument optique, et/ou les paramètres d'une réponse impulsionnelle représentative de l'intégration des charges sur au moins un détecteur élémentaire de la matrice de détecteurs, et/ou les paramètres d'une réponse impulsionnelle représentative d'un filé, i.e. d'un mouvement linéaire, de la matrice de détecteurs pendant un temps de pause, et/ou les paramètres d'une réponse impulsionnelle représentative d'un bougé, i.e. d'un mouvement non linéaire, de la matrice de détecteurs pendant le temps de pause, et/ou les paramètres représentatifs des coordonnées d'une image géométrique de la source ponctuelle, ladite image géométrique étant ponctuelle..

Pour chaque matrice de filtre spectral, optionnellement pour chaque source ponctuelle, l'étape suivante du procédé 100 est une étape de détermination 102 d'une valeur initiale VIP de chaque paramètre de l'ensemble des paramètres du modèle paramétrique de la réponse impulsionnelle modélisée de l'instrument optique, l'ensemble de paramètres comprenant en particulier un sous-ensemble de paramètres commun à la pluralité de matrices de filtres spectraux, et un sous-ensemble de paramètres spécifiques à chaque matrice de filtre spectral.

Selon un exemple de mise en œuvre du procédé 100, l'étape de détermination 102 d'une valeur initiale des paramètres du modèle paramétrique, comprend le choix d'une valeur égale à 0, par exemple, pour chaque paramètre. Selon un autre exemple de mise en œuvre, l'étape de détermination 102 d'une valeur initiale comprend le choix, pour chaque paramètre, d'une valeur égale à une valeur déterminée antérieurement, par exemple par une calibration précédente.

L'étape suivante du procédé 100, après l'étape de détermination 102 d'une valeur initiale des paramètres du modèle paramétrique, à calculer, pour chaque matrice de filtre spectral, et le cas échéant pour chaque source ponctuelle, une réponse impulsionnelle, sur la base de la valeur initiale VIP des paramètres, puis à échantillonner 103 la réponse impulsionnelle calculée, selon un masque d'échantillonnage associé à la matrice de filtre spectral: autrement dit, la valeur d'un échantillon de la réponse impulsionnelle est calculée, sur la base de la valeur des paramètres déterminés précédemment, en un point du masque d'échantillonnage, ledit masque d'échantillonnage comprenant un ensemble de points répartis régulièrement sur la matrice de filtre spectral considérée, par exemple au point central de chaque filtre élémentaire de la matrice de filtre spectral. Selon un exemple particulier, chaque matrice de filtre spectral est superposée à la matrice de détecteurs, et une position de la matrice de filtre spectral relativement à la matrice de détecteurs est décalée selon au moins l'une parmi les deux dimensions de la matrice de détecteurs, de sorte que chaque point d'échantillonnage du masque d'échantillonnage associé à une matrice de filtre spectral est décalé par rapport à un point correspondant du masque d'échantillonnage associé à une autre matrice de filtre spectral.

Pour chaque matrice de filtre spectral, et le cas échéant pour chaque source ponctuelle, une valeur d'un coût, dans la bande spectrale considérée, fonction d'une distance entre la réponse impulsionnelle calculée, et la réponse impulsionnelle observée, est ensuite calculée, au cours d'une étape de calcul 104 d'une valeur d'un coût. Ce coût est calculé, par exemple, sur la base d'une différence entre la réponse impulsionnelle modélisée et la réponse impulsionnelle observée pour chacun des points du masque d'échantillonnage. Par exemple, le coût est égal à une somme des carrés des différences, pour chacun des points du masque d'échantillonnage, optionnellement pondéré par un coefficient de normalisation.

Une valeur d'un coût global CG pour l'ensemble des bandes spectrales, le cas échéant pour chaque source ponctuelle, est ensuite calculé au cours d'une étape de calcul 105 d'une valeur du coût global CG. Par exemple, le coût global est égal à une somme des coûts précédemment calculés pour chaque bande spectrale.

Pour chaque matrice de filtre spectral, et le cas échéant pour chaque source ponctuelle, une valeur estimée de chaque paramètre VEP de l'ensemble de paramètres est estimée au cours d'une étape d'estimation 102bis, la valeur estimée de chaque paramètre VEP étant estimée à partir de la valeur initiale VIP des paramètres, déterminée à l'étape 102, et d'une variation VAR; ladite variation VAR étant estimée en fonction de la valeur du coût global CG, la valeur estimée VEP étant égale à la variation estimée VAR ajoutée à la valeur initiale des paramètres VIP.

Pour chaque matrice de filtre spectral, et le cas échéant pour chaque source ponctuelle, les étapes 103, 104, et 105, précédemment décrites, sont mises en œuvre à nouveau avec la valeur estimée des paramètres VEP. Ces étapes sont représentées sur la figure 1, respectivement avec les références 103bis, 104bis, 105bis, de sorte que l'étape 105bis est une étape de calcul d'une nouvelle valeur du coût global NCG pour l'ensemble des bandes spectrales, le cas échéant pour chaque source ponctuelle, pour la valeur estimée des paramètres VEP.

La nouvelle valeur du coût global NCG calculé à l'étape 105bis pour la valeur estimée des paramètres VEP est comparé, au cours d'une étape de comparaison 106, à la valeur du coût global CG calculée à l'étape 105 pour la valeur initiale des paramètres VIP déterminée à l'étape 102. Si le résultat de la comparaison RC satisfait à un critère d'arrêt CRA alors la valeur estimée des paramètres VEP est retenue pour la modélisation de la réponse impulsionnelle de l'instrument optique. A titre d'exemple, le résultat de la comparaison RC est une différence entre la nouvelle valeur du coût global NCG et la valeur du coût global CG, et le critère d'arrêt CRA est satisfait si ladite différence est inférieure à un seuil prédéterminé.

Si le résultat de la comparaison RC ne satisfait pas au critère d'arrêt CRA alors les étapes du procédé 100 sont répétées 107, depuis l'étape d'estimation 102bis d'une valeur des paramètres VEP, en passant par l'étape 104bis de calcul d'une nouvelle valeur du coût par bande spectrale, et par l'étape 105bis de calcul d'une nouvelle valeur du coût global NCG pour l'ensemble des bandes spectrales, jusqu'à l'étape de comparaison 106 entre la valeur du coût global CG, calculée à l'itération précédente de la répétition 107, et la nouvelle valeur du coût global NCG calculée à l'itération courante de la répétition 107, jusqu'à ce que le critère d'arrêt CRA soit satisfait par le résultat de la comparaison RC. A chaque nouvelle itération, l'étape d'estimation 102bis d'une valeur estimée des paramètres VEP est réalisée à partir d'une valeur des paramètres égale à la valeur estimée des paramètres VEP obtenue à l'étape d'estimation 102bis de l'itération précédente. A cet effet, à chaque nouvelle itération, au cours d'une étape de détermination 107bis, la valeur initiale des paramètres VIP devient égale à valeur estimée des paramètres VEP de l'itération précédente, et la valeur du coût global CG devient égale à la nouvelle valeur du coût global NCG, pour chaque matrice de filtre spectral.

Selon un exemple de mise en œuvre, à chaque nouvelle itération, au cours de l'étape d'estimation 102bis d'une valeur estimée des paramètres VEP, la variation VAR de la valeur estimée des paramètres VEP estimée à l'itération précédente, est estimée à partir d'une matrice jacobienne du modèle paramétrique de la réponse impulsionnelle, ladite matrice jacobienne étant déterminée par rapport à la valeur estimée des paramètres VEP estimée à l'itération précédente, de sorte que la répétition 107, des étapes comprises entre l'étape d'estimation 102bis d'une valeur estimée des paramètres VEP, et l'étape de comparaison 106 entre la nouvelle valeur du coût global NCG et la valeur du coût global CG, jusqu'à ce qu'un critère d'arrêt CRA soit satisfait par le résultat de la comparaison RC, correspond à une mise en œuvre d'un algorithme itératif du type Levenberg-Marquardt.

Selon un exemple particulier de mise en œuvre, une amplitude de la variation VAR estimée est contrainte, de sorte que la variation VAR estimée est comprise entre une valeur minimum prédéterminée et une valeur maximum prédéterminée.

Selon ces dispositions, la valeur estimée des paramètres VEP, converge progressivement, au fur et à mesure des itérations successives, vers une valeur estimée des paramètres VEP de plus en plus proche d'une valeur limite. Ainsi la réponse impulsionnelle modélisée selon la valeur des paramètres VEP estimée à l'issue de l'étape de répétition 107bis, 107 est représentative de la réponse impulsionnelle observée, de sorte qu'une mesure de l'aberration de l'instrument optique peut être déterminée, au cours d'une étape de détermination de la mesure de l'aberration 108, sur la base valeur estimée des paramètres ; optionnellement cette mesure de l'aberration peut être utilisée pour compenser l'aberration, par un traitement utilisant la réponse impulsionnelle ainsi modélisée sur la base de la valeur estimée des paramètres.

Selon un exemple de mise en œuvre, le traitement pour la compensation de l'aberration est un traitement d'amélioration de l'image acquise par l'instrument optique, par exemple par application d'un filtre de compensation de l'image calculé à partir de la mesure de l'aberration, i.e. de la valeur estimée des paramètres du modèle paramétrique, ou par application d'un traitement de restauration de l'image, fonction de la mesure de l'aberration, i.e. de la valeur estimée des paramètres du modèle paramétrique.

Selon un autre exemple de mise en œuvre, le traitement pour la compensation de l'aberration est une commande de l'instrument optique pour actionner une optique active de l'instrument optique, la commande étant basée sur la valeur estimée des paramètres du modèle paramétrique.

Optionnellement le traitement pour la compensation de l'aberration peut combiner une commande de l'instrument optique pour actionner une optique active de l'instrument optique, et un traitement d'amélioration de l'image.

Il est à noter que plus le nombre de matrices de filtres spectraux est important plus l'estimation de la valeur des paramètres communs du modèle paramétrique est robuste, et meilleure est la qualité de la compensation de l'aberration, obtenue grâce au modèle.

Comme cela a été indiqué, l'ensemble de paramètres comprend des paramètres globaux caractéristiques d'un état global de la combinaison optique, et des paramètres spécifiques à certains éléments de la chaîne d'acquisition de l'instrument optique, notamment spécifiques à chaque bande spectrale. Selon un exemple particulier, l'ensemble des paramètres du modèle paramétrique comprend un sous-ensemble de paramètres spécifiques à chaque nouvelle acquisition d'une source ponctuelle connue, le modèle paramétrique de réponse impulsionnelle étant représentatif des différentes réponses impulsionnelles observées dans la bande spectrale de chaque matrice de filtre spectral, le cas échéant pour chaque source ponctuelle et/ou pour chaque acquisition d'une même source ponctuelle. Les étapes suivantes sont mises en œuvre pour chaque matrice de filtre spectral, le cas échéant pour chaque source ponctuelle, et/ou pour chaque acquisition d'une même source ponctuelle :
- étape de détermination 102 de la valeur initiale des paramètres VIP, et étape d'estimation 102bis de la valeur estimée des paramètres VEP,
- étapes d'échantillonnage 103 , 103bis de la réponse impulsionnelle calculée sur la base de la valeur initiale des paramètres VIP, respectivement de la nouvelle réponse impulsionnelle calculée sur la base de la valeur estimée des paramètres VEP,
- étapes de calcul 104, 104bis de la valeur du coût, respectivement de la nouvelle valeur du coût,
et dans lequel la valeur du coût global, respectivement la nouvelle valeur du coût global, est calculée 105, 105bis pour l'ensemble des bandes spectrales et pour l'ensemble des sources ponctuelles.

Selon un exemple particulier de mise en œuvre, parmi la pluralité d'acquisitions successives d'une source ponctuelle, au moins un paramètre du modèle paramétrique prend une valeur au cours d'une acquisition et une autre valeur différente au cours d'au moins une autre acquisition, la valeur et l'autre valeur dudit au moins un paramètre étant inconnues lors de l'étape d'acquisition. La variation appliquée entre la valeur et l'autre valeur n'est pas nécessairement connue. Si la variation du paramètre est connue, l'estimation de la valeur des paramètres du modèle paramétrique sera plus robuste.

Selon un aspect, l'invention concerne un programme d'ordinateur comprenant un ensemble d'instructions configuré pour mettre en œuvre le procédé 100 selon l'un des modes de mise en œuvre décrits ci-avant, lorsqu'il est exécuté par un processeur d'une unité de traitement des images et de contrôle d'un instrument optique comprenant une matrice de détecteurs multispectraux, la matrice de détecteurs multispectraux comprenant une matrice de détecteurs, et une pluralité de matrices de filtres spectraux, chaque matrice de filtre spectral étant associée à une bande spectrale.

Selon un autre aspect, l'invention concerne un support lisible par un ordinateur comprenant le programme d'ordinateur décrit ci-avant.

## Revendications

1. Procédé (100) de mesure d'une aberration dans une image acquise par un instrument optique comprenant une matrice de détecteurs multispectraux, la matrice de détecteurs multispectraux comprenant une matrice de détecteurs, et une pluralité de matrices de filtres spectraux, chaque matrice de filtre spectral étant associée à une bande spectrale, le procédé (100) comprenant les étapes suivantes :
- acquisition (101) par la matrice de détecteurs de l'instrument optique d'une image d'une source ponctuelle connue, une réponse spectrale de la source étant connue, l'image comprenant, pour chaque matrice de filtre spectral, une partie d'une tache image de la source ponctuelle acquise dans la bande spectrale de ladite matrice de filtre spectral ;
- pour chaque matrice de filtre spectral, détermination (102) d'une valeur initiale (VIP) de chaque paramètre d'un ensemble de paramètres d'un modèle paramétrique d'une réponse impulsionnelle modélisée de l'instrument optique, l'ensemble de paramètres comprenant un sous-ensemble de paramètres commun à la pluralité de matrices de filtres spectraux, et un sous-ensemble de paramètres spécifiques à chaque matrice de filtre spectral;
- pour chaque matrice de filtre spectral, échantillonnage (103) d'une réponse impulsionnelle calculée sur la base de la valeur initiale des paramètres (VIP) appliquée au modèle paramétrique, l'échantillonnage étant réalisé selon un masque d'échantillonnage associé à la matrice de filtre spectral,
- pour chaque matrice de filtre spectral, calcul (104) d'une valeur d'un coût dans la bande spectrale, la valeur du coût étant fonction d'une distance entre la réponse impulsionnelle calculée et la réponse impulsionnelle observée pour chacun des points du masque d'échantillonnage,
- calcul (105) d'une valeur d'un coût global (CG) pour l'ensemble des bandes spectrales en fonction de la valeur du coût dans chaque bande spectrale,
- pour chaque matrice de filtre spectral, estimation (102bis) d'une valeur estimée (VEP) de chaque paramètre de l'ensemble de paramètres, la valeur estimée (VEP) étant fonction d'une variation (VAR) estimée à partir de la valeur du coût global (CG), la valeur estimée (VEP) étant égale à la variation estimée (VAR) ajoutée à la valeur initiale des paramètres (VIP);
- pour chaque matrice de filtre spectral, échantillonnage (103bis) d'une nouvelle réponse impulsionnelle calculée sur la base de la valeur estimée (VEP) des paramètres appliquée au modèle paramétrique, l'échantillonnage étant réalisé selon le masque d'échantillonnage associé à la matrice de filtre spectral,
- pour chaque matrice de filtre spectral, calcul (104bis) d'une nouvelle valeur du coût dans ladite bande spectrale, la nouvelle valeur du coût étant fonction de la distance entre la nouvelle réponse impulsionnelle calculée et la réponse impulsionnelle observée pour chacun des points du masque d'échantillonnage,
- calcul (105bis) d'une nouvelle valeur du coût global (NCG) pour l'ensemble des bandes spectrales en fonction de la nouvelle valeur du coût dans chaque bande spectrale.
- comparaison (106) entre la nouvelle valeur du coût global (NCG) et la valeur du coût global (CG) pour obtenir un résultat de la comparaison (RC);
- déterminer (107bis) que la valeur initiale des paramètres (VIP) est égale la valeur estimée des paramètres (VEP) et que la valeur du coût global (CG) est égale à la nouvelle valeur du coût global (NCG), et pour chaque matrice de filtre spectral, répéter (107) les étapes comprises entre l'étape d'estimation (102bis) d'une valeur estimée des paramètres (VEP), jusqu'à l'étape de comparaison (106) ) entre la nouvelle valeur du coût global (NCG) et la valeur du coût global (CG) jusqu'à ce qu'un critère d'arrêt (CRA) soit satisfait par le résultat de la comparaison (RC), de sorte qu'à chaque itération de l'étape de répétition (107), au cours de l'étape d'estimation (102bis) la variation (VAR) est estimée à partir d'une valeur initiale des paramètres (VIP) égale à la valeur estimée des paramètres (VEP) estimée au cours de l'itération précédente, et à partir d'une valeur du coût global (CG) égale à une nouvelle du coût global calculée au cours de l'itération précédente;
- déterminer (108) une mesure de l'aberration sur la base de la valeur estimée des paramètres (VEP) de la réponse impulsionnelle.

2. Procédé selon la revendication 1, dans lequel l'étape d'acquisition (101) comprend l'acquisition de plusieurs sources ponctuelles connues et/ou plusieurs acquisitions d'une même source ponctuelle connue, l'ensemble de paramètres du modèle paramétrique comprenant un sous-ensemble de paramètres spécifiques à chaque acquisition, le modèle paramétrique de réponse impulsionnelle étant associé aux différentes réponses impulsionnelles observées dans la bande spectrale de chaque matrice de filtre spectral, et pour chaque source ponctuelle et/ou pour chaque acquisition d'une même source ponctuelle, et dans lequel les étapes suivantes sont mises en œuvre pour chaque matrice de filtre spectral, et pour chaque source ponctuelle, et/ou pour chaque acquisition d'une même source ponctuelle :
- étape de détermination (102) de la valeur initiale des paramètres (VIP), et étape d'estimation (102bis) de la valeur estimée des paramètres (VEP),
- étapes d'échantillonnage (103 , 103bis) de la réponse impulsionnelle calculée sur la base de la valeur initiale des paramètres (VIP), respectivement de la nouvelle réponse impulsionnelle calculée sur la base de la valeur estimée des paramètres (VEP),
- étapes de calcul (104, 104bis) de la valeur du coût, respectivement de la nouvelle valeur du coût,
et dans lequel la valeur du coût global, respectivement la nouvelle valeur du coût global, est calculée (105, 105bis) pour l'ensemble des bandes spectrales et pour l'ensemble des sources ponctuelles.

3. Procédé selon la revendication 1 ou 2, dans lequel la pluralité de matrices de filtres spectraux comprend au moins trois matrices de filtres spectraux, configurées pour filtrer chacune dans une bande spectrale complémentaire des autres matrices.

4. Procédé selon l'une des revendications 1 à 3, dans lequel, à l'étape d'estimation 102bis de la valeur estimée (VEP) de chaque paramètre, la variation (VAR) est estimée à partir d'une matrice jacobienne du modèle paramétrique de la réponse impulsionnelle, de sorte que la répétition (107), des étapes comprises entre l'étape d'estimation (102bis) d'une valeur estimée des paramètres (VEP), et l'étape de comparaison (106) entre la nouvelle valeur du coût global (NCG) et la valeur du coût global (CG), jusqu'à ce qu'un critère d'arrêt (CRA) soit satisfait par le résultat de la comparaison (RC), correspond à une mise en œuvre d'un algorithme itératif du type Levenberg-Marquardt.

5. Procédé selon l'une des revendications 1 à 4, dans lequel la valeur du coût global, respectivement la nouvelle valeur du coût global, est égale à une somme de la valeur des coûts, respectivement de la nouvelle valeur des coûts, sur l'ensemble des bandes spectrales.

6. Procédé selon l'une des revendications 1 à 5, dans lequel le résultat de la comparaison est égal à une différence entre la valeur du nouveau coût global et la valeur du coût global, le critère d'arrêt prédéterminé étant satisfait lorsque le résultat de la comparaison est inférieur à un seuil.

7. Procédé selon l'une des revendications 1 à 6, dans lequel l'ensemble des paramètres comprend au moins l'un parmi les paramètres d'une réponse impulsionnelle représentative d'une partie optique de l'instrument optique, les paramètres d'une réponse impulsionnelle représentative de l'intégration des charges sur au moins un détecteur élémentaire de la matrice de détecteurs, les paramètres d'une réponse impulsionnelle représentative d'un filé, i.e. d'un mouvement linéaire, de la matrice de détecteurs pendant un temps de pose, les paramètres d'une réponse impulsionnelle représentative d'un bougé, i.e. d'un mouvement non linéaire, de la matrice de détecteurs pendant le temps de pose, les paramètres représentatifs des coordonnées d'une image géométrique de la source ponctuelle, ladite image géométrique étant ponctuelle..

8. Procédé selon l'une des revendications 1 à 7, dans lequel la mesure de l'aberration est utilisée pour compenser l'aberration par un traitement d'amélioration de l'image acquise par l'instrument optique, le traitement d'amélioration étant fonction de la mesure de l'aberration, le traitement comprenant par exemple une application d'un filtre de compensation calculé à partir de la mesure de l'aberration, ou le traitement comprenant par exemple une restauration de l'image fonction de la mesure de l'aberration.

9. Procédé selon l'une des revendications 1 à 8, dans lequel la mesure de l'aberration est utilisée pour compenser l'aberration par une commande de l'instrument optique pour actionner une optique active de l'instrument optique, la commande étant basée sur la mesure de l'aberration.

10. Programme d'ordinateur comprenant un ensemble d'instructions configuré pour mettre en œuvre le procédé 100 selon l'une des revendications 1 à 9 lorsqu'il est exécuté par un processeur d'une unité de traitement des images et de contrôle, d'un instrument optique comprenant une matrice de détecteurs multispectraux, la matrice de détecteurs multispectraux comprenant une matrice de détecteurs, et une pluralité de matrices de filtres spectraux, chaque matrice de filtre spectral étant associée à une bande spectrale.

11. Support lisible par un ordinateur comprenant un programme d'ordinateur selon la revendication 10.

## Patentansprüche

1. Verfahren (100) zur Messung einer Aberration in einem von einem optischen Instrument erfassten Bild, das eine Matrix aus multispektralen Detektoren umfasst, wobei die Matrix aus multispektralen Detektoren eine Detektormatrix umfasst, und eine Vielzahl von Spektralfiltermatrizen, wobei jede Spektralfiltermatrix einem Spektralband zugeordnet ist, wobei das Verfahren (100) die folgenden Schritte umfasst:
- Erfassen (101), durch die Detektormatrix des optischen Instruments, eines Bildes einer bekannten Punktquelle, wobei eine Spektralantwort der Quelle bekannt ist, wobei das Bild für jede Spektralfiltermatrix einen Teil eines Bildflecks der im Spektralband der Spektralfiltermatrix erfassten Punktquelle umfasst;
- Bestimmen (102), für jede Spektralfiltermatrix, eines Anfangswerts (VIP) jedes Parameters einer Parametergruppe eines Parametermodells einer modellierten Impulsantwort des optischen Instruments, wobei die Parametergruppe eine Parameter-Untergruppe, die der Vielzahl von Spektralfiltermatrizen gemeinsam ist, und eine Parameter-Untergruppe, die für jede Spektralfiltermatrix spezifisch ist, umfasst;
- Abtasten (103), für jede Spektralfiltermatrix, einer Impulsantwort, die auf der Basis des auf das Parametermodell angewendeten Parameter-Anfangswerts (VIP) berechnet wird, wobei die Abtastung gemäß einer der Spektralfiltermatrix zugeordneten Abtastmaske durchgeführt wird,
- Berechnen (104), für jede Spektralfiltermatrix, eines Kostenwerts im Spektralband, wobei der Kostenwert von einem Abstand zwischen der berechneten Impulsantwort und der beobachteten Impulsantwort für jeden der Punkte der Abtastmaske abhängt,
- Berechnen (105) eines Gesamtkostenwerts (GK) für alle Spektralbänder in Abhängigkeit vom Kostenwert in jedem Spektralband,
- Schätzen (102bis), für jede Spektralfiltermatrix, eines Schätzwerts (VEP) jedes Parameters der Parametergruppe, wobei der Schätzwert (VEP) von einer geschätzten Variation (VAR) ausgehend vom Gesamtkostenwert (CG) abhängt, wobei der Schätzwert (VEP) der geschätzten Variation (VAR) entspricht, die dem Parameter-Anfangswert (VIP) hinzugefügt wird;
- Abtasten (103bis), für jede Spektralfiltermatrix, einer neuen Impulsantwort, die auf der Basis des auf das Parametermodell angewendeten Schätzwerts (VEP) der Parameter berechnet wird, wobei die Abtastung gemäß der der Spektralfiltermatrix zugeordneten Abtastmaske durchgeführt wird,
- Berechnen (104bis), für jede Spektralfiltermatrix, eines neuen Kostenwerts im Spektralband, wobei der neue Kostenwert vom Abstand zwischen der berechneten neuen Impulsantwort und der beobachteten Impulsantwort für jeden der Punkte der Abtastmaske abhängt,
- Berechnen (105bis) eines neuen Gesamtkostenwerts (NCG) für alle Spektralbänder in Abhängigkeit vom neuen Kostenwert in jedem Spektralband,
- Vergleichen (106) zwischen dem neuen Gesamtkostenwert (NCG) und dem Gesamtkostenwert (CG), um ein Vergleichsergebnis (RC) zu erhalten;
- Bestimmen (107bis), dass der Parameter-Anfangswert (VIP) gleich dem Parameter-Schätzwert (VEP) ist und dass der Gesamtkostenwert (CG) gleich dem neuen Gesamtkostenwert (NCG) ist, und für jede Spektralfiltermatrix, Wiederholen (107) der Schritte zwischen dem Schätzschritt (102bis) eines Parameter-Schätzwerts (VEP) bis zum Vergleichsschritt (106) zwischen dem neuen Gesamtkostenwert (NCG) und dem Gesamtkostenwert (CG), bis ein Stoppkriterium (CRA) durch das Vergleichsergebnis (RC) erfüllt ist, so dass bei jeder Iteration des Wiederholungsschritts (107) während des Schätzschritts (102bis) die Variation (VAR) ausgehend von einem Parameter-Anfangswert (VIP), der gleich dem Parameter-Schätzwert (VEP) während der vorherigen Iteration ist, und ausgehend von einem Gesamtkostenwert (CG), der gleich einer Neuberechnung der Gesamtkosten während der vorherigen Iteration ist, geschätzt wird;
- Bestimmen (108) einer Messung der Aberration auf der Basis des Parameter-Schätzwerts (VEP) der Impulsantwort.

2. Verfahren nach Anspruch 1, wobei der Erfassungsschritt (101) die Erfassung mehrerer bekannter Punktquellen und/oder mehrerer Erfassungen derselben bekannten Punktquelle umfasst, wobei die Parametergruppe des Parametermodells eine Parameter-Untergruppe, die für jede Erfassung spezifisch ist, umfasst, wobei das Impulsantwort-Parametermodell den verschiedenen Impulsantworten zugeordnet ist, die im Spektralband jeder Spektralfiltermatrix beobachtet werden, und für jede Punktquelle und/oder für jede Erfassung derselben Punktquelle, und wobei die folgenden Schritte für jede Spektralfiltermatrix und für jede Punktquelle und/oder für jede Erfassung derselben Punktquelle durchgeführt werden:
- Bestimmungsschritt (102) des Parameter-Anfangswerts (VIP) und Schätzschritt (102bis) des Parameter-Schätzwerts (VEP),
- Abtastschritte (103, 103bis) der auf Basis des Parameter-Anfangswerts (VIP) berechneten Impulsantwort beziehungsweise der auf Basis des Parameter-Schätzwerts (VEP) berechneten neuen Impulsantwort,
- Berechnungsschritte (104, 104bis) des Kostenwerts beziehungsweise des neuen Kostenwerts,
und wobei der Gesamtkostenwert beziehungsweise der neue Gesamtkostenwert (105, 105bis) für alle Spektralbänder und für alle Punktquellen berechnet wird.

3. Verfahren nach Anspruch 1 oder 2, wobei die Vielzahl von Spektralfiltermatrizen mindestens drei Spektralfiltermatrizen umfasst, die derart ausgelegt sind, dass sie jeweils in einem zu den anderen Matrizen komplementären Spektralband filtern.

4. Verfahren nach einem der Ansprüche 1 bis 3, wobei im Schätzschritt 102bis des Schätzwerts (VEP) jedes Parameters die Variation (VAR) ausgehend von einer Jacobi-Matrix des Parametermodells der Impulsantwort geschätzt wird, so dass die Wiederholung (107) der Schritte zwischen dem Schätzschritt (102bis) eines Parameter-Schätzwerts (VEP) und dem Vergleichsschritt (106) zwischen dem neuen Gesamtkostenwert (NCG) und dem Gesamtkostenwert (CG) bis zur Erfüllung eines Stoppkriteriums (CRA) durch das Vergleichsergebnis (RC) einer Anwendung eines iterativen Algorithmus vom Typ Levenberg-Marquardt entspricht.

5. Verfahren nach einem der Ansprüche 1 bis 4, wobei der Gesamtkostenwert beziehungsweise der neue Gesamtkostenwert gleich einer Summe des Kostenwerts beziehungsweise des neuen Kostenwerts über alle Spektralbänder ist.

6. Verfahren nach einem der Ansprüche 1 bis 5, wobei das Vergleichsergebnis gleich einer Differenz zwischen dem Wert der neuen Gesamtkosten und dem Wert der Gesamtkosten ist, wobei das vorbestimmte Stoppkriterium erfüllt ist, wenn das Vergleichsergebnis unter einem Schwellenwert liegt.

7. Verfahren nach einem der Ansprüche 1 bis 6, wobei die Parametergruppe mindestens einen der Parameter einer Impulsantwort, die für einen optischen Teil des optischen Instruments repräsentativ ist, der Parameter einer Impulsantwort, die für die Integration der Lasten auf mindestens einen elementaren Detektor der Detektormatrix repräsentativ ist, der Parameter einer Impulsantwort, die für eine Wanderung, das heißt eine lineare Bewegung, der Detektormatrix während einer Verweilzeit repräsentativ ist, der Parameter einer Impulsantwort, die für ein Verwackeln, das heißt eine nichtlineare Bewegung, der Detektormatrix während der Verweilzeit repräsentativ ist, und der Parameter umfasst, die für die Koordinaten eines geometrischen Bildes der Punktquelle repräsentativ sind, wobei das geometrische Bild punktförmig ist.

8. Verfahren nach einem der Ansprüche 1 bis 7, wobei die Messung der Aberration verwendet wird, um die Aberration durch eine Verbesserungsverarbeitung des vom optischen Instrument erfassten Bildes zu kompensieren, wobei die Verbesserungsverarbeitung von der Messung der Aberration abhängig ist, wobei die Verarbeitung beispielsweise eine Anwendung eines Kompensationsfilters umfasst, der aus der Messung der Aberration berechnet wird, oder die Verarbeitung beispielsweise eine Wiederherstellung des Bildes in Abhängigkeit von der Messung der Aberration umfasst.

9. Verfahren nach einem der Ansprüche 1 bis 8, wobei die Messung der Aberration verwendet wird, um die Aberration durch eine Steuerung des optischen Instruments zur Betätigung einer aktiven Optik des optischen Instruments zu kompensieren, wobei die Steuerung auf der Messung der Aberration basiert.

10. Computerprogramm, umfassend eine Gruppe von Anweisungen, die zur Durchführung des Verfahrens 100 nach einem der Ansprüche 1 bis 9 ausgelegt ist, wenn sie von einem Prozessor einer Bildverarbeitungs- und Steuerungseinheit eines optischen Instruments ausgeführt wird, das eine Matrix aus multispektralen Detektoren umfasst, wobei die Matrix aus multispektralen Detektoren eine Detektormatrix und eine Vielzahl von Spektralfiltermatrizen umfasst, wobei jede Spektralfiltermatrix einem Spektralband zugeordnet ist.

11. Computerlesbares Medium, das ein Computerprogramm nach Anspruch 10 umfasst.

## Claims

1. A method (100) for measuring an aberration in an image acquired by an optical instrument comprising a multispectral detector array, the multispectral detector array comprising a detector array and a plurality of spectral filter arrays, each spectral filter array being associated with a spectral band, the method (100) comprising the following steps:
- acquiring (101), by the detector array of the optical instrument, an image of a known point source, a spectral response of the source being known, the image comprising, for each spectral filter array, a part of an image spot of the point source acquired in the spectral band of said spectral filter array;
- for each spectral filter array, determining (102) an initial value (VIP) of each parameter of a set of parameters of a parametric model of a modeled impulse response of the optical instrument, the set of parameters comprising a subset of parameters common to the plurality of spectral filter arrays, and a subset of parameters specific to each spectral filter array;
- for each spectral filter array, sampling (103) a calculated impulse response based on the initial value of the parameters (VIP) applied to the parametric model, the sampling being carried out according to a sampling mask associated with the spectral filter array;
- for each spectral filter array, calculating (104) a value of a cost in the spectral band, the value of the cost being a function of a distance between the calculated impulse response and the observed impulse response for each point of the sampling mask;
- calculating (105) a value of a global cost (CG) for the set of spectral bands as a function of the value of the cost in each spectral band,
- for each spectral filter array, estimating (102bis) an estimated value (VEP) of each parameter of the set of parameters, the estimated value (VEP) being a function of a variation (VAR) estimated from the value of the global cost (CG), the estimated value (VEP) being equal to the estimated variation (VAR) added to the initial value of the parameters (VIP);
- for each spectral filter array, sampling (103bis) a new calculated impulse response based on the estimated value (VEP) of the parameters applied to the parametric model, the sampling being carried out according to the sampling mask associated with the spectral filter array;
- for each spectral filter array, calculating (104bis) a new value of the cost in said spectral band, the new value of the cost being a function of the distance between the new calculated impulse response and the observed impulse response for each point of the sampling mask,
- calculating (105bis) a new value of the global cost (NCG) for the set of spectral bands as a function of the new value of the cost in each spectral band.
- comparing (106) the new value of the global cost (NCG) with the value of the global cost (CG) to obtain a result of the comparison (RC);
- determining (107bis) that the initial value of the parameters (VIP) is equal to the estimated value of the parameters (VEP) and that the value of the global cost (CG) is equal to the new value of the global cost (NCG), and for each spectral filter array, repeating (107) the steps from the step of estimating (102bis) an estimated value of the parameters (VEP) to the step of comparing (106) the new value of the global cost (NCG) with the value of the global cost (CG) until a stopping criterion (CRA) is satisfied by the result of the comparison (RC), such that, at each iteration of the repetition step (107), during the estimation step (102bis), the variation (VAR) is estimated from an initial value of the parameters (VIP) equal to the estimated value of the parameters (VEP) during the previous iteration, and from a value of the global cost (CG) equal to a new value of the global cost calculated during the previous iteration;
- determining (108) a measurement of the aberration based on the estimated value of the parameters (VEP) of the impulse response.

2. The method according to claim 1, wherein the acquisition step (101) comprises the acquisition of multiple known point sources and/or multiple acquisitions of the same known point source, the set of parameters of the parametric model comprising a subset of parameters specific to each acquisition, the parametric model of the impulse response being associated with the different observed impulse responses in the spectral band of each spectral filter array, and for each point source and/or for each acquisition of the same point source, and wherein the following steps are implemented for each spectral filter array, and for each point source, and/or for each acquisition of the same point source:
- a step of determining (102) the initial value of the parameters (VIP), and a step of estimating (102bis) the estimated value of the parameters (VEP);
- steps of sampling (103, 103bis) the calculated impulse response based on the initial value of the parameters (VIP), and respectively the new calculated impulse response based on the estimated value of the parameter (VEP),
- steps of calculating (104, 104bis) the value of the cost, and respectively the new value of the cost,
and wherein the value of the global cost, and respectively the new value of the global cost, is calculated (105, 105bis) for the set of spectral bands and for the set of point sources.

3. The method according to claim 1 or 2, wherein the plurality of spectral filter arrays comprises at least three spectral filter arrays, each configured to filter within a spectral band that is complementary to the other arrays.

4. The method according to any of claims 1 to 3, wherein, in step of estimating 102bis the estimated value (VEP) of each parameter, the variation (VAR) is estimated from a Jacobian matrix of the parametric model of the impulse response, such that the repetition (107) of the steps from the step of estimating (102bis) an estimated value of the parameters (VEP) to the step of comparing (106) the new value of the global cost (NCG) with the value of the global cost (CG), until a stopping criterion (CRA) is satisfied by the result of the comparison (RC), corresponds to an implementation of an iterative algorithm of the Levenberg-Marquardt type.

5. The method according to any of claims 1 to 4, wherein the value of the global cost, or respectively the new value of the global cost, is equal to a sum of the values of the costs, respectively the new values of the costs, over the set of spectral bands.

6. The method according to any of claims 1 to 5, wherein the result of the comparison is equal to a difference between the value of the new global cost and the value of the global cost, the predetermined stopping criterion being satisfied when the result of the comparison is less than a threshold.

7. The method according to any of claims 1 to 6, wherein the set of parameters comprises at least one among the parameters of an impulse response representative of an optical part of the optical instrument, the parameters of an impulse response representative of the integration of the charges on at least one elementary detector of the detector array, the parameters of an impulse response representative of a linear motion blur, i.e., a linear movement, of the detector array during an exposure time, the parameters of an impulse response representative of a non-linear motion blur, i.e., a non-linear movement, of the detector array during the exposure time, the parameters representative of the coordinates of a geometric image of the point source, said geometric image being point-like.

8. The method according to any of claims 1 to 7, wherein the measurement of the aberration is used to compensate for the aberration by a process for enhancement of the image acquired by the optical instrument, the enhancement process being a function of the measurement of the aberration, the process comprising, for example, applying a compensation filter calculated from the measurement of the aberration, or the process comprising, for example, restoration of the image as a function of the measurement of the aberration.

9. The method according to any of claims 1 to 8, wherein the measurement of the aberration is used to compensate for the aberration by controlling the optical instrument to actuate an active optics component of the optical instrument, the control being based on the measurement of the aberration.

10. A computer program comprising a set of instructions configured to implement the method 100 according to any of claims 1 to 9 when executed by a processor of an image processing and control unit of an optical instrument comprising a multispectral detector array, the multispectral detector array comprising a detector array and a plurality of spectral filter arrays, each spectral filter array being associated with a spectral band.

11. A computer-readable medium comprising a computer program according to claim 10.
